(19) Europäisches Patentamt
European Patent Office
Office européen des brevets

(11) Veröffentlichungsnummer: **0 065 163**
**B1**

(12) **EUROPÄISCHE PATENTSCHRIFT**

(45) Veröffentlichungstag der Patentschrift: **24.10.84**

(51) Int. Cl.³: **C 09 D 5/40,** C 25 D 13/06, C 09 D 5/02

(21) Anmeldenummer: **82103735.5**

(22) Anmeldetag: **03.05.82**

(54) **Wässriges kationisches Lacksystem und seine Verwendung.**

(30) Priorität: **09.05.81 DE 3118418**

(43) Veröffentlichungstag der Anmeldung: **24.11.82 Patentblatt 82/47**

(45) Bekanntmachung des Hinweises auf die Patenterteilung: **24.10.84 Patentblatt 84/43**

(84) Benannte Vertragsstaaten: **AT BE CH DE FR GB IT LI NL SE**

(56) Entgegenhaltungen:
**DE - A - 2 926 001**
**FR - A - 2 359 886**
**US - A - 4 251 414**

(73) Patentinhaber: **BASF Aktiengesellschaft, Carl-Bosch-Strasse 38, D-6700 Ludwigshafen (DE)**

(72) Erfinder: **Schenck, Hans-Uwe, Dr., Erlenweg 6, D-6707 Wachenheim (DE)**
Erfinder: **Blum, Rainer, Bannwasserstrasse 58, D-6700 Ludwigshafen (DE)**
Erfinder: **Gulbins, Erich, Dr., Ladenburgerstrasse 80, D-6900 Heidelberg (DE)**
Erfinder: **Kempter, Fritz-Erdmann, Dr., Seewiesstrasse 27, D-8133 Feldafing (DE)**
Erfinder: **Schupp, Eberhard, Dr., Tilsiterweg 4, D-6830 Schwetzingen (DE)**

**EP 0 065 163 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein wässeriges kationisches Lacksystem und seine Verwendung, insbesondere für die kathodische Elektrotauchlackierung von Metalloberflächen.

Das Elektrotauchlackierverfahren mit anodisch abscheidbaren Überzugsmitteln ist seit langem bekannt. In jüngster Zeit hat sich die kathodische Elektrotauchlackierung als besonders vorteilhaft erwiesen. Die dafür verwendbaren Vernetzungsmöglichkeiten sind allerdings begrenzt, da die meisten herkömmlichen Vernetzungssysteme säurekatalysiert sind, ein an der Kathode abgeschiedener Film jedoch stark basisch ist.

Eine für die Vernetzung von kathodisch abgeschiedenen Lackfilmen geeignete Reaktion ist die Urethanbildung aus geblockten Isocyanatgruppen und Hydroxylgruppen, wie sie z.B. in der DE-OS Nr. 2057799 beschrieben ist. Eine weitere Möglichkeit zur Vernetzung bieten die Reaktionsprodukte von Mannichbasen und Epoxidharzen, wie sie z.B. in der DE-OS Nr. 2320301 geschildert sind.

Ein weiterer, für die kathodische Elektrotauchlackierung geeigneter Bindemitteltyp ist durch eine Vernetzung über C–C-Doppelbindungen charakterisiert. Diese Art der Vernetzung ist wegen der im Vergleich zu den vorgenannten Bindemitteltypen geringeren Tendenz zur Abspaltung niedermolekularer Bestandteile beim Einbrennen vorteilhaft.

So werden in den DE-OS Nrn. 2749776 und 2707482 Kunstharze für die Kataphorese beschrieben, die als vernetzungsaktive Zentren α,β-ungesättigte Carbonestergruppen enthalten. In den deutschen Patentanmeldungen P Nrn. 2942488.2, 3021300.4 und 3026823.6 werden zur Herstellung von kathodisch abscheidbaren Überzugsmitteln geeignete Bindemittel vorgeschlagen, welche basische Gruppen und ausserdem α,β-ungesättigte Amidomethylgruppen enthalten, die durch Umsetzung von α,β-ungesättigte amidomethylgruppentragenden Mono- und/oder Polyphenolen, Polyepoxidverbindungen und Aminen oder Aminsalzen erhalten werden. Diese Bindemittel können auch in Kombination mit Polydienölen verwendet werden.

Auch in DE-OS Nrn. 2926001 und 2734413 werden kationische Lacksysteme beschrieben, die auf Polymerisaten von konjugierten Dienen beruhen, die zumindestens z.T. über Doppelbindungen vernetzt werden.

Zur ausreichenden Vernetzung müssen die genannten, über Doppelbindungen vernetzten Systeme analog wie andere bekannte Klassen kathodisch abscheidbarer Elektrotauchlacke bei relativ hohen Temperaturen, wie etwa 30 min bei 180° C eingebrannt werden. Aufgrund der erheblich angestiegenen Energiekosten müssen jedoch Systeme entwickelt werden, die bereits bei deutlich tieferen Temperaturen innerhalb von 20 bis 30 min beim Einbrennen ausreichend vernetzen.

In den DE-OS Nrn. 2926001 und 2734413 wird der Zusatz von öllöslichen Metallsalzen von organischen Säuren und Übergangsmetallen zur Beschleunigung eines oxidierenden und vernetzenden Effekts an den ungesättigten Gruppen in den dort verwendeten Dienpolymerisaten empfohlen. Die Sikkativierung mit diesen Verbindungen beschleunigt jedoch – wie anhand von Vergleichsbeispielen im folgenden gezeigt wird – nicht nur den Einbrennvorgang, sondern bedingt durch die Vernetzungscharakteristik auch eine rauhere Filmoberfläche und hat einen ungünstigen Einfluss auf die Stabilität der Elektrotauchlackbäder.

Das gleiche gilt für den in der DE-OS Nr. 2541234 beschriebenen Zusatz von Metallsalzen.

Aufgabe der vorliegenden Erfindung ist es, wässerige kationische Lacksysteme aufzuzeigen, deren Vernetzung beim Einbrennen stark beschleunigt ist, so dass damit eine drastische Senkung der Einbrenntemperaturen ermöglicht wird, ohne dass gleichzeitig die Glätte der entstehenden Filme und die Lagerstabilität der wässerigen Elektrotauchlacke ungünstig beeinflusst werden.

Überraschenderweise wird diese Aufgabe durch Metallkomplexverbindungen, insbesondere solchen, die ihre katalysierende Wirkung erst bei Temperaturen über 100° C entfalten, gelöst. Die gewünschte Wirkung kann dabei durch Zusätze radikalliefernder Initiatoren bzw. sauerstoffabgebender organischer Verbindungen unterstützt werden.

Gegenstand der vorliegenden Erfindung ist ein wässeriges kationisches Lacksystem, enthaltend ein olefinisch ungesättigtes Lackbindemittel mit stickstoffbasischen Gruppierungen, die zumindest teilweise mit Säure in Salze überführt sind, sowie gegebenenfalls weitere übliche Hilfs- und Zusatzstoffe, das dadurch gekennzeichnet ist, dass es 1 ppm bis 1% (Metallgehalt, bezogen auf Bindemittel) einer Metallkomplexverbindung von Co, Mn, Pb, Ce, Zr, Ca, Zn, Fe, Al, Cu, Ni oder Cd, gegebenenfalls in Kombination mit Inhibitor und/oder radikallieferndem Initiator enthält, wobei die Metallkomplexverbindungen als Komplexliganden Diacetyldioxim, Cyclohexanonoxim, Acetylacetonsalicylaldehyd, Methylethylketoxim, α-Benzoinoxim, Cyclohexandiondioxim, Salicylaldoxim, Ethylendiamintetraessigsäure, Nitrilotriessigsäure, α-Aminosäuren, wie Glycin, Alanin, 8-Hydroxychinolin, das Bisaldimin des Salicylaldehyds mit Ethylendiamin, Aminoguanidin, Biguanid, Polyamine, o-Aminophenol, Mannichbasen von Aminen und Polyaminen und ein- und mehrkernigen Phenolen, oder Moleküle oder Ionen mit ein- oder mehrzähliger Ligandenfunktion enthalten, wobei die an der Komplexbildung beteiligten Funktionen der Komplexliganden

$R-NH_2$ R = H, Alkyl, Aryl

$R-OH$ Alkohole, Phenole

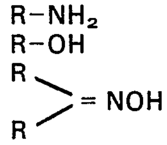 Oxime

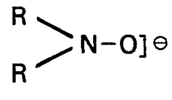 Oximatanionen

| | |
|---|---|
| R−SH | Mercaptane |
| R−S−R | Thioether |
| R−O−R | Ether |

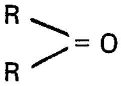

Ketone, Aldehyde

oder

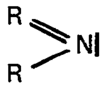

Aldimine, Ketimine

und Kombinationen hiervon sind.

Als olefinisch ungesättigte Lackbindemittel mit stickstoffbasischen Gruppierungen kommen vorzugsweise solche mit α,β-olefinisch ungesättigten Amidomethylgruppen und/oder α,β-olefinisch ungesättigten Carbonsäureestergruppen und/oder von einem Dienpolymerisat abgeleitete Produkte in Betracht.

Gegenstand der vorliegenden Erfindung ist ausserdem die Verwendung des erfindungsgemässen wässerigen kationischen Lacksystems für die kathodische Elektrotauchlackierung von Metalloberflächen sowie für konventionelle Lackiermethoden, wie Spritzen, Tauchen oder Fluten.

Das erfindungsgemässe wässerige kationische Lacksystem zeichnet sich durch hohe Lagerstabilität aus und ergibt schon bei niedrigen Temperaturen bzw. kurzer Einbrenndauer Filme mit sehr glatter Oberfläche.

Zu den Aufbaukomponenten des erfindungsgemässen wässerigen kationischen Lacksystems ist folgendes auszuführen.

Als olefinisch ungesättigtes Lackbindemittel mit stickstoffbasischen Gruppierungen, die zumindest teilweise mit Säure in Salze überführt sind, kommen eine Vielzahl von Bindemitteln in Frage, die neben stickstoffbasischen – durch Säurezusatz in die entsprechenden Salze umgewandelten – Gruppierungen vernetzungsaktive olefinische Doppelbindungen tragen, wobei diese entweder über eine Konjugation mit einer C−Heteroatom-Doppelbindung aktiviert elektronenarm sein können, oder es können isolierte bzw. zu einer weiteren C−C-Doppelbindung konjugiert stehende Doppelbindungen sein, die elektronenreicher als der erstgenannte Typ sind. Beispielhaft für solche Bindemitteltypen seien genannt: Homopolymerisate von konjugierten Dienen, wie Butadien, Isopren u.a. und/oder Copolymerisate aus solchen konjugierten Dienen mit weiteren Vinylmonomeren, wie Styrol, (Meth)acrylestern u.a., die entweder durch ionische oder radikalische Homo- bzw. Copolymerisation erhalten werden und durch Einbau stickstoffbasischer Gruppierungen modifiziert sind. Weiterhin können als solche Bindemittel Derivate solcher Polymerer verwendet werden.

Eine weitere geeignete Bindemittelklasse enthält aktivierte C−C-Doppelbindungen, wie etwa solche, die in Konjugation zu einer Carbonylgruppe stehen.

Auch Bindemittel, die sowohl elektronenarme, aktivierte als auch elektronenreiche Doppelbindungen enthalten, sind für die erfindungsgemässen Überzugsmittel geeignet. Desgleichen können Kombinationen von Bindemitteln verwendet werden, wovon das eine aktivierte, das andere elektronenreiche Doppelbindungen trägt.

Neben den vernetzungsaktiven Doppelbindungen können die Bindemittel auch im untergeordneten Masse entweder selbst andere vernetzungsaktive Gruppen, z.B. Mannichbasengruppen aus einer Reaktion eines phenolischen Körpers mit Formaldehyd und sekundärem Amin und/oder Methylolgruppen und/oder Methylolethergruppen und/oder verkappte Isocyanatgruppen enthalten, oder es können die Bindemittel, die die vernetzungsaktiven C−C-Doppelbindungen tragen, im Gemisch mit weiteren Harzen vorliegen, wie vollständig verkappten Polyisocyanaten, Acrylatharzen, Epoxidharzen, Polyestern, Alkydharzen oder Kohlenwasserstoffharzen.

Als vernetzungsaktive, olefinisch ungesättigte Lackbindemittel mit kationischen Gruppierungen auf der Grundlage stickstoffbasischer Gruppen sind insbesondere solche mit α,β-olefinisch ungesättigten Amidomethylgruppen, α,β-olefinisch ungesättigten Carbonsäureestergruppen und von Dienpolymerisaten abgeleitete Produkte, wie sie z.B. in P Nrn. 2942488.2, 3021300.4, 3026823.6, DE-OS Nrn. 2557562, 2636797, 2753861, 2755538, 2732902, 2732955, 2836830, 2832937, EP-A Nr. 0012963, DE-OS Nrn. 2707482, 2707405, 2749776, 2801523, 2752255, GB-PS Nr. 2008125, DE-OS Nrn. 3000911, 2732736, 2728470, 2926001, 2934172, 2943879, 2616591, 2754733, 2734413, 2944082, 2924343, 2828014, 2911243, 2911242, 2833786 beschrieben sind.

Der Gehalt des Bindemittels an basischem, zur Salzbildung fähigem Stickstoff liegt im allgemeinen zwischen 0,05 und 10, vorzugsweise zwischen 0,1 und 2 Gew.-%, bezogen auf Bindemittel (fest), der Gehalt an olefinischen Doppelbindungen ist im allgemeinen so hoch, dass sich eine Iodzahl von 5 bis 500, vorzugsweise von 20 bis 400, ergibt.

Geeignete Metallkomplexverbindungen sind solche von Co, Mn, Pb, Ce, Zr, Ca, Zn, Fe, Al, Cu, Ni, Cd sowie Gemischen dieser Metalle. Bevorzugt sind Co, Mn, Fe, Pb, Ce, Zr, Cu, Ni.

Als Komplexliganden können verwendet werden: Diacetyldioxim, Cyclohexanonoxim, Acetylacetonsalicylaldehyd, Methylethylketoxim, α-Benzoinoxim, Cyclohexandiondioxim, Salicylaldoxim, Ethylendiamintetraessigsäure, Nitrilotriessigsäure, α-Aminosäuren, wie z.B. Glycin, Alanin, 8-Hydroxychinolin, das Bisaldimin des Salicylaldehyds mit Ethylendiamin, Aminoguanidin, Biguanid, Polyamine, o-Aminophenol, Mannichbasen von Aminen und Polyaminen und ein- und mehrkernigen Phenolen, allgemein Komplexe der Metallionen mit Molekülen oder Ionen mit ein- oder mehrzähliger Ligandenfunktion, wobei die an der Komplexbildung beteiligten Funktionen der Komplexliganden

| | |
|---|---|
| $R{-}NH_2$ | R = H, Alkyl, Aryl |
| R−OH | Alkohole, Phenole |

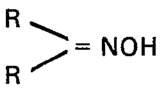 Oxime

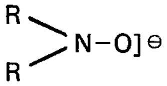 Oximatanionen

R−SH Mercaptane

R−S−R Thioether

R−O−R Ether

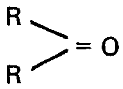 Ketone, Aldehyde

oder

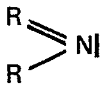 Aldimine, Ketimine

und Kombinationen hiervon sein können. Es kann sich bei den Komplexen um neutrale Komplexe, Kationkomplexe oder um Anionkomplexe handeln.

Bevorzugt sind Komplexe der genannten Metalle mit genannten Liganden, mit denen Chelat-Komplexe gebildet werden.

Die Metallkomplexverbindungen sind im erfindungsgemässen Lacksystem in Mengen von 1 ppm bis 1 Gew.-%, vorzugsweise 5 bis 5000 ppm (Metallgehalt bezogen auf Bindemittel), enthalten.

Die Metallkomplexe können nach verschiedenen Methoden in das kationische Lacksystem eingearbeitet werden. So können vorgebildete Metallkomplexe in fester Form oder als Lösung im Bindemittel dispergiert oder gelöst und in dieser Form nach Einarbeitung weiterer Lackzusatzstoffe, wie z.B. Pigmenten und Füllstoffen, im wässerigen Elektrotauchbad dispergiert bzw. gelöst werden; oder die vorgebildeten Metallkomplexe können in fester Form oder als Lösung separat vom Bindemittel im wässerigen Elektrotauchlackbad gelöst oder dispergiert werden. Ein anderer Weg besteht darin, keine vorgebildeten Metallkomplexe einzusetzen, sondern Metallionen in Form ihrer Salze und die als Komplexliganden dienenden organischen Verbindungen getrennt in das Bindemittel oder das wässerige Elektrotauchbad einzuarbeiten, so dass sich die Metallkomplexe *in situ* bilden.

Die Metallkomplexverbindungen können gegebenenfalls mit Inhibitoren und/oder radikalliefernden bzw. sauerstoffabspaltenden Initiatoren kombiniert werden.

Die Metallkomplexverbindungen können mit Inhibitoren kombiniert werden. Geeignete Inhibitoren sind die für olefinisch ungesättigte Verbindungen, z.B. polymerisierbare Monomere üblicherweise verwendeten Inhibitoren, die autoxidative bzw. radikalisch über olefinische Doppelbindungen ablaufende Vernetzungsprozesse bei Raumtemperatur inhibieren. Beispiele für derartige Inhibitoren sind Hydrochinon, Hydrochinonmonoalkylether, Phenothiazin, β-Naphtylamin, Diphenylpikrylhydrazyl, Salze von N-Nitrosocyclohexylhydroxylamin, vorzugsweise Hydrochinonmonomethylether und Phenothiazin.

Die Inhibitoren werden im erfindungsgemässen Lacksystem im allgemeinen in Mengen von 1 ppm bis 3 Gew.-%, vorzugsweise 100 ppm bis 1 Gew.-%, bezogen auf Bindemittel (fest) eingesetzt.

Als Verbindungen, die unter Mitwirkung der erfindungsgemäss verwendeten Metallkomplexe Sauerstoff und/oder Radikale liefern, die zur Unterstützung der Vernetzung mit eingesetzt werden können, kommen z.B. organische Peroxide, Peroxiddicarbonate, Alkylperester, Perketale und Hydroperoxide in Frage, wie z.B. Cumolhydroperoxid, Pinanhydroperoxid, Dicumylperoxid, Benzoylperoxid, Di-t-butylperoxid.

Die Initiatoren und Inhibitoren können bereits in das Bindemittel selbst vor der Bereitung der wässerigen kationischen Lacksysteme eingearbeitet werden oder sie können separat dem wässerigen Lacksystem, z.B. dem Elektrotauchlackbad zugesetzt werden.

Die in den erfindungsgemässen Überzugsmitteln vorliegenden Bindemittel bzw. Bindemittelgemische sind wasserlöslich bzw. wasserdispergierbar und kataphoretisch abscheidbar. Sie können neben den Bindemitteln und den erfindungsgemäss eingesetzten Metallkomplexen sowie gegebenenfalls Inhibitoren und Initiatoren übliche, in der Lackiertechnik eingesetzte Hilfs- und Zusatzstoffe enthalten, wie Pigmente, Füllstoffe, Verlaufsmittel, koaleszierende Lösungsmittel (Definition nach DE-OS Nr. 2934467), Weichmacher und weitere Vernetzungskatalysatoren, welche auf die vernetzungsaktiven Funktionen wirken, die ausser den C−C-Doppelbindungen im Bindemittel vorliegen, wie z.B. verkappte Säuren, wie sie etwa in der DE-OS Nr. 2658812 beschrieben sind.

Die erfindungsgemässen kationischen Lacksysteme enthalten im allgemeinen 95 bis 40, vorzugsweise 90 bis 60 Gew.-% Wasser und können unter Anwendung konventioneller Lackiermethoden wie Spritzen, Tauchen, Fluten auf das zu überziehende bzw. zu lackierende Substrat, wie z.B. auf Holz, Metall, Glas oder Keramik, aufgetragen, getrocknet und bei Temperaturen von über 130° C gehärtet werden. Die damit erhaltenen Überzüge zeichnen sich beispielsweise durch eine hohe Filmglätte, Härte und Lösungsmittelbeständigkeit aus. Bevorzugt werden die erfindungsgemässen Lackbindemittel mit Säuren, wie z.B. Phosphorsäure und deren Derivaten, vorzugsweise mit wasserlöslichen Carbonsäuren, wie z.B. Essigsäure, Ameisensäure, Milchsäure, protoniert angewandt. Das protonierte Lackbindemittel ist wasserverdünnbar und kann unter Anwendung der oben angeführten konventionellen Lackiermethoden verarbeitet werden, wobei ebenfalls Überzüge mit sehr wertvollen Eigenschaften erhalten werden.

Die bevorzugte Verwendung der protonierten Lackbindemittel ist die kathodische Elektrotauchlackierung elektrisch leitender Flächen, z.B. von Metallteilen, Blechen usw., aus Messing, Kupfer, Aluminium, Eisen und Stahl, die gegebenenfalls chemisch vorbehandelt, z.B. phosphatiert sind.

Zur kathodischen Elektrotauchlackierung wird im allgemeinen durch Verdünnen mit entionisiertem Wasser ein Feststoffgehalt des Elektrotauchbades von 5 bis 30 Gew.-% eingestellt. Die Abscheidung erfolgt im allgemeinen bei Temperaturen von 15 bis 40° C während einer Zeit von 1 bis 3 min und bei Bad-pH-Werten von 4,0 bis 8,5, vorzugsweise von pH 5,5 bis 7,5, bei Abscheidespannungen zwischen 50 und 500 V. Nach dem Abspülen des auf dem elektrisch leitenden Körper kathodisch abgeschiedenen Films wird dieser bei Temperaturen von über 130, vorzugsweise zwischen 140 und 170° C, ca. 20 min gehärtet.

Die folgenden Beispiele sollen die Erfindung näher erläutern.

Die in den Beispielen genannten Teile und Prozente sind Gewichtsteile und Gewichtsprozente.

*Bindemittel A*

Das Bindemittel mit 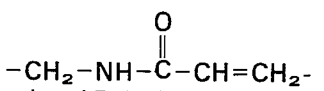 Gruppen wurde entsprechend Beispiel 4 der deutschen Patentanmeldung P Nr. 3021300.4 hergestellt.

*Bindemittel B*

Das Bindemittel mit 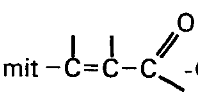 -Gruppen wurde entsprechend Beispiel 5 der DE-OS Nr. 2707482 hergestellt.

*Bindemittel C*

Das Bindemittel, das auf einem modifizierten Polybutadienöl beruht, wurde entsprechend Beispiel 5 der DE-OS Nr. 2734412 hergestellt.

*Vergleichsbeispiel A1*

Das Bindemittel A wurde, wie in der deutschen Patentanmeldung P Nr. 3021300.4 beschrieben, in einen 10%igen wässerigen Elektrotauchlack überführt, auf als Kathode geschaltetem unvorbehandeltem Stahl sowie auf zinkphosphatiertem Stahlblech durch Elektrotauchlackierung abgeschieben und bei abgestuften Einbrenntemperaturen eingebrannt. Die Eigenschaften des erhaltenen Lackfilms wurde überprüft. Die Abscheidebedingungen und Eigenschaften sind in Tabelle 1 zusammengefasst.

*Vergleichsbeispiel A2*

Es wurde wie in Vergleichsbeispiel A1 verfahren, jedoch unter alleiniger zusätzlicher Verwendung eines sikkativierenden Metallsalzes. Dieses wurde zunächst in der Bindemittellösung homogen verteilt, bevor diese in einen wässerigen Elektrotauchlack überführt wurde. Typ und Menge des Zusatzes gehen aus Tabelle 1 hervor.

*Beispiel 1*

Es wurde wie in Vergleichsbeispiel A1 verfahren, jedoch unter zusätzlicher Verwendung eines erfindungsgemäss eingesetzten Metallkomplexes. Dieser wurde zunächst in der Bindemittellösung homogen verteilt, bevor diese in einen wässerigen Elektrotauchlack überführt wurde. Typ und Menge des verwendeten Metallkomplexes gehen aus Tabelle 1 hervor.

*Vergleichsbeispiel B1*

Das Bindemittel B wurde, wie in DE-OS Nr. 2707482 beschrieben (Beispiel 5), in einen 10%igen Elektrotauchlack überführt, auf einem als Kathode geschaltetem Stahlblech abgeschieden und bei abgestuften Einbrenntemperaturen eingebrannt. Die Eigenschaften des erhaltenen Lackfilms wurden überprüft. Die Abscheidebedingungen und Eigenschaften sind in Tabelle 2 zusammengefasst.

*Vergleichsbeispiel B2*

Es wurde wie in Vergleichsbeispiel B1 verfahren, jedoch unter alleiniger zusätzlicher Verwendung eines sikkativierenden Metallsalzes. Dieses wurde zunächst in der Bindemittellösung homogen verteilt, bevor diese in einen wässerigen Elektrotauchlack überführt wurde. Typ und Menge des Zusatzes gehen aus Tabelle 2 hervor.

*Beispiel 2*

Es wurde wie in Vergleichsbeispiel B1 verfahren, jedoch unter zusätzlicher Verwendung eines erfindungsgemäss eingesetzten Metallkomplexes. Dieser wurde zunächst in der Bindemittellösung homogen verteilt, bevor diese in einen wässerigen Elektrotauchlack überführt wurde. Typ und Menge des verwendeten Metallkomplexes gehen aus Tabelle 2 hervor.

*Vergleichsbeispiel C1*

Das Bindemittel C wurde, wie in DE-OS Nr. 2743413 beschrieben, in einen 12%igen wässerigen Elektrotauchlack überführt, auf zinkphosphatiertem Stahlblech kathodisch durch Elektrotauchlackierung abgeschieden und bei abgestuften Einbrenntemperaturen eingebrannt. Die Eigenschaften des erhaltenen Lackfilms wurden überprüft. Die Abscheidebedingungen und Eigenschaften sind in Tabelle 3 zusammengefasst.

*Vergleichsbeispiel C2*

Es wurde wie in Vergleichsbeispiel C1 verfahren, jedoch unter alleiniger zusätzlicher Verwendung eines sikkativierenden Metallsalzes. Dieses wurde zunächst in der Bindemittellösung homogen verteilt, bevor diese in einen wässerigen Elektrotauchlack überführt wurde. Typ und Menge des Zusatzes gehen aus Tabelle 3 hervor.

*Beispiel 3*

Es wurde wie in Vergleichsbeispiel C1 verfahren, jedoch unter zusätzlicher Verwendung eines erfindungsgemäss eingesetzten Metallkomplexes. Dieser wurde zunächst in der Bindemittellösung homogen verteilt, bevor diese in einen wässerigen Elektrotauchlack überführt wurde. Typ und Menge des verwendeten Metallkomplexes gehen aus Tabelle 3 hervor.

*Prüfung der Überzüge*

1. Pendelhärte nach König DIN 53 157 (s)

2. Erichsen-Tiefung DIN 53 156 (mm)
3. Acetonfestigkeit als Mass für die Vernetzungsgüte: Hierzu wurde mit einem acetongetränkten Wattebausch 20mal kräftig auf einer Fläche von 5 $cm^2$ hin- und hergerieben. Das Aussehen der Prüffläche wurde nach folgendem Massstab beurteilt:
   0: keinerlei Veränderung
   1: leicht matt
   2: matt, aber nur oberflächlicher Angriff
   3: starker Angriff
   4: Ablösung bis zum Untergrund
4. Die Glätte der Oberfläche wurde visuell beurteilt:
   0: gut
   1: schwache Struktur
   2: etwas rauh
   3: matt, starke Struktur
5. Die eingebrannten Filme wurden geritzt und im ASTM-Salzsprühtest (DIN SS 50 021) unterworfen. Nach 14 d wurde die Unterwanderung des Lacks vom Ritz aus einseitig gemessen und bestimmt

*Tabelle 1*

| Beispiel | Bindemitteltyp | Metallverbindung | | Abscheidung | | | | Prüfung | | | | |
|---|---|---|---|---|---|---|---|---|---|---|---|---|
| | | Typ | Menge bez. auf Harz (%) | Substrat | V | Schichtdicke (µm) | Härtungstemperatur (30 min) (°C) | Härte[1] | Tiefung[2] | Acetonfestigkeit[3] | Oberfläche[4] | Korrosionsfestigkeit[5] |
| Vergleichsbeispiel A1 | A | — | — | Stahlblech | 90 | 16<br>17<br>16 | 140<br>160<br>180 | 122<br>136<br>190 | 0,7<br>1,4<br>6,4 | 4<br>4<br>2 | 1<br>1<br>1 | >20<br>>20<br>2-3 |
| | | | | Zinkphosphat. Stahlblech | 170 | 17<br>18<br>17 | 140<br>160<br>180 | 130<br>152<br>192 | 0,4<br>1,2<br>6,0 | 4<br>4<br>2 | 1<br>1<br>1 | >20<br>>20<br>1-2 |
| Vergleichsbeispiel A2 | A | Kobaltnaphthenat | 0,048 (ber. als Co-Metall) | Stahlblech | 80 | 19<br>17<br>18 | 140<br>160<br>180 | 165<br>190<br>192 | 1,2<br>6,0<br>6,0 | 2<br>0<br>0 | 3<br>3<br>2 | 8-12<br>2-3<br>2-3 |
| | | | | Zinkphosphat. Stahlblech | 180 | 18<br>20<br>19 | 140<br>160<br>180 | 160<br>191<br>194 | 1,5<br>5,9<br>6,0 | 2<br>0<br>0 | 3<br>3<br>2 | 6-7<br>1-2<br>1-2 |
| 1 | A | Kobaltsalicylaldehydkomplex | 0,048 (ber. als Co-Metall) | Stahlblech | 80 | 17<br>16<br>18 | 140<br>160<br>180 | 162<br>190<br>201 | 5,1<br>6,2<br>6,0 | 0<br>0<br>0 | 0<br>0<br>0 | 5-6<br>2-4<br>1-3 |
| | | | | Zinkphosphat. Stahlblech | 180 | 17<br>19<br>18 | 140<br>160<br>180 | 165<br>196<br>198 | 4,7<br>6,0<br>6,2 | 0<br>0<br>0 | 0<br>0<br>0 | 5-8<br>1-2<br>1-2 |

*Tabelle 2*

| Beispiel | Bindemitteltyp | Metallverbindung | | Abscheidung | | | | Prüfung | | | | |
|---|---|---|---|---|---|---|---|---|---|---|---|---|
| | | Typ | Menge bez. auf Harz (%) | Substrat | V | Schichtdicke (µm) | Härtungstemperatur (30 min) (°C) | Härte[1] | Tiefung[2] | Acetonfestigkeit[3] | Oberfläche[4] | Korrosionsfestigkeit[5] |
| Vergleichsbeispiel B1 | B | — | — | Stahlblech | 280 | 16<br>17<br>16<br>17-18 | 140<br>160<br>180<br>200 | n.b.<br>n.b.<br>210<br>205 | n.b.<br>n.b.<br>6,8<br>7,0 | 4<br>4<br>3<br>3 | 1<br>1<br>1<br>1 | >20<br>>20<br>4-5<br>2-3 |
| Vergleichsbeispiel B2 | B | Kobaltnaphthenat | 0,72 (ber. als Co-Metall) | Stahlblech | 280 | 16-17<br>16<br>16<br>17 | 140<br>160<br>180<br>200 | n.b.<br>196<br>210<br>206 | n.b.<br>6,9<br>6,8<br>7,2 | 4<br>2<br>2<br>0 | 2<br>3<br>3<br>3 | >20<br>2-3<br>2<br>2 |
| 2 | B | Kobalt-salicylaldehyd-komplex | 0,72 (ber. als Co-Metall) | Stahlblech | 280 | 17<br>18<br>17<br>17-18 | 140<br>160<br>180<br>200 | n.b.<br>203<br>211<br>208 | n.b.<br>7,2<br>7,0<br>7,3 | 4<br>1<br>0<br>0 | 2<br>1<br>1<br>1 | >20<br>2-3<br>1-2<br>1-2 |

*Tabelle 3*

| Beispiel | Bindemitteltyp | Metallverbindung | | Abscheidung | | | | Prüfung | | | | |
|---|---|---|---|---|---|---|---|---|---|---|---|---|
| | | Typ | Menge bez. auf Harz (%) | Substrat | V | Schichtdicke (µm) | Härtungstemperatur (30 min) (°C) | Härte[1] | Tiefung[2] | Acetonfestigkeit[3] | Oberfläche[4] | Korrosionsfestigkeit[5] |
| Vergleichsbeispiel C1 | C | — | — | Zinkphosphat. Stahlblech | 140 | 19<br>20<br>18 | 180<br>200<br>220 | 70<br>130<br>152 | 0,6<br>1,8<br>3,2 | 4<br>3<br>1 | 1<br>1<br>1 | >20<br>>20<br>3 |
| Vergleichsbeispiel C2 | C | Kobaltnaphthenat | 0,72 (ber. als Co-Metall) | Zinkphosphat. Stahlblech | 140 | 20<br>19<br>20 | 160<br>180<br>200 | 156<br>153<br>151 | 5,6<br>7,8<br>7,9 | 1<br>0<br>0 | 2<br>3<br>3 | 3-5<br>2<br>1-2 |
| 3 | C | Kobalt salicylaldehyd-komplex | 0,72 (ber. als Co-Metall) | Zinkphosphat. Stahlblech | 140 | 18<br>20<br>19 | 160<br>180<br>200 | 159<br>156<br>154 | 7,9<br>8,1<br>8,0 | 0<br>0<br>0 | 1<br>1<br>1 | 3-6<br>1-2<br>1-2 |

## Patentansprüche

1. Wässeriges kationisches Lacksystem, enthaltend ein olefinisch ungesättigtes Lackbindemittel mit stickstoffbasischen Gruppierungen, die zumindest teilweise mit Säure in Salze überführt sind, sowie gegebenenfalls weitere übliche Hilfs- und Zusatzstoffe, dadurch gekennzeichnet, dass es 1 ppm bis 1 Gew.-% (Metallgehalt, bezogen auf Bindemittel) einer Metallkomplexverbindung von Co, Mn, Pb, Ce, Zr, Ca, Zn, Fe, Al, Cu, Ni oder Cd, gegebenenfalls in Kombination mit 1 ppm bis 3 Gew.-%, bezogen auf Bindemittel, eines Inhibitors und/oder radikalliefernden Initiators enthält, wobei die Metallkomplexverbindungen als Komplexliganden Diacetyldioxim, Cyclohexanonoxim, Acetylacetonsalicylaldehyd, Methylethylketoxim, α-Benzoinoxim, Cyclohexandiondioxim, Salicylaldoxim, Ethylendiamintetraessigsäure, Nitrilotriessigsäure, α-Aminosäuren, wie Glycin, Alanin, 8-Hydroxychinolin, das Bisaldimin des Salicylaldehyds mit Ethylendiamin, Aminoguanidin, Biguanid, Polyamine, o-Aminophenol, Mannichbasen von Aminen und Polyaminen und ein- und mehrkernigen Phenolen, oder Moleküle oder Ionen mit ein- oder mehrzähliger Ligandenfunktion enthalten, wobei die an der Komplexbildung beteiligten Funktionen der Komplexliganden

$R-NH_2$ R = H, Alkyl, Aryl
$R-OH$ Alkohole, Phenole
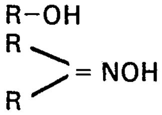 Oxime
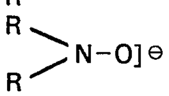 Oximatanionen
$R-SH$ Mercaptane
$R-S-R$ Thioether
$R-O-R$ Ether
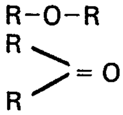 Ketone, Aldehyde
oder
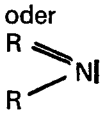 Aldimine, Ketimine

und Kombinationen hiervon sind.

2. Wässeriges kationisches Lacksystem nach Anspruch 1, dadurch gekennzeichnet, dass als radikalliefernde Initiatoren solche verwendet werden, die bei Temperaturen über 100°C Radikale liefern oder Sauerstoff abspalten.

3. Wässeriges kationisches Lacksystem nach einem der beiden Ansprüche 1 oder 2, dadurch gekennzeichnet, dass es als olefinisch ungesättigte Lackbindemittel mit stickstoffbasischen Gruppierungen solche mit α,β-olefinisch ungesättigten Amidomethylgruppen und/oder α,β-olefinisch ungesättigten Carbonsäureestergruppen und/oder ein von einem Dienpolymerisat abgeleitetes Produkt enthält.

4. Verwendung des wässerigen kationischen Lacksystems nach einem der vorhergehenden Ansprüche für die kathodische Elektrotauchlackierung von Metalloberflächen.

5. Verwendung des wässerigen kationischen Lacksystems nach einem der Ansprüche 1 bis 3 für konventionelle Lackiermethoden, wie Spritzen, Tauchen oder Fluten.

## Claims

1. An aqueous cationic surface-coating system containing an olefinically unsaturated surface-coating binder having basic nitrogen groups, some or all of which are converted into salts with acid, and, if desired, other conventional auxiliaries and additives, which surface-coating system contains from 1 ppm to 1% by weight (metal content, based on the binder) of a Co, Mn, Pb, Ce, Zr, Ca, Zn, Fe, Al, Cu, Ni or Cd complex compound, alone or in combination with from 1 ppm to 3% by weight, based on the binder, of an inhibitor or an initiator which supplies free radicals, or a mixture of an inhibitor and an initiator which supplies free radicals, the metal complex compound containing, as complex ligands, diacetyl dioxime, cyclohexanone oxime, acetylacetone-salicylaldehyde, methyl ethyl ketoxime, α-benzoin oxime, cyclohexanedione dioxime, salicylaldoxime, ethylenediaminetetraacetic acid, nitrilotriacetic acid, α-aminoacids, e.g. glycine and alanine, 8-hydroxyquinoline, the bis-aldimine of salicylaldehyde with ethylenediamine, aminoguanidine, biguanide, polyamines, o-aminophenol, Mannich bases of amines and polyamines and mononuclear and polynuclear phenols, or molecules or ions with one or several ligand functions, and the complex ligand functions participating in the complexing being:

$R-NH_2$ R = H, alkyl or aryl
$R-OH$ i.e. alcohols and phenols
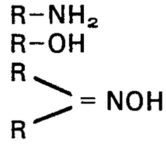 i.e. oximes
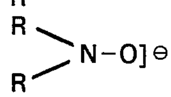 i.e. oximate anions
$R-SH$ i.e. mercaptans
$R-S-R$ i.e. thioethers
$R-O-R$ i.e. ethers
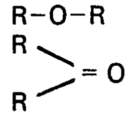 i.e. ketones and aldehydes
or
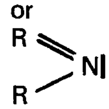 i.e. aldimines and ketimines

and combinations thereof.

2. An aqueous cationic surface-coating system as claimed in Claim 1, wherein an initiator which supplies free radicals or splits off oxygen, at above 100°C, is used.

3. An aqueous cationic surface-coating system as claimed in one of Claims 1 or 2, which contains, as the olefinically unsaturated surface-coating binder with basic nitrogen groups, one having α,β-olefinically unsaturated amidomethyl groups and/or α,β-olefinically unsaturated carboxylic

acid ester groups, and/or a product derived from a diene polymer.

4. The use of an aqueous cationic surface-coating system as claimed in one of the preceding claims for the cathodic electrocoating of metal surfaces.

5. The use of an aqueous cationic surface-coating system as claimed in one of Claims 1 to 3 for conventional surface-coating methods, such as spraying, dipping or flood coating.

## Revendications

1. Composition de vernis cationique aqueuse, contenant un liant de vernis insaturé oléfiniquement et à groupements N-basiques qui sont transformés, au moins partiellement, en sels par des acides, et éventuellement d'autres auxiliaires et additifs usuels, caractérisée par le fait qu'elle contient 1 ppm à 1% en poids (teneur en métal rapportée au liant) d'un composé complexe métallique de Co, Mn, Pb, Ce, Zr, Ca, Zn, Fe, Al, Cu, Ni ou Cd, éventuellement en combinaison avec 1 ppm à 3% en poids, rapporté au liant, d'un inhibiteur et/ou d'un initiateur fournissant des radicaux, les composés complexes métalliques contenant, comme coordinats des complexes, la diacétyldioxime, la cyclohexanonoxime, l'acétylacétonesalicylaldéhyde, la méthyléthylcétoxime, l'α-benzoïnoxime, la cyclohexanedionedioxime, la salicylaldoxime, l'acide éthylènediaminetétracétique, l'acide nitrilotriacétique, des α-aminoacides tels que la glycine, l'alanine, la 8-hydroxyquinoline, la bisaldimine du salicylaldéhyde avec l'éthylènediamine, l'aminoguanidine, la biguanide, des polyamines, l'o-aminophénol, des bases de Mannich d'amines, de polyamines et de phénols à un ou plusieurs noyaux, ou des molécules ou zones à une ou plusieurs fonctions coordinats, les fonctions des coordinats ayant participé à la formation des complexes étant:

$R-NH_2$ R = H, alkyle, aryle
$R-OH$ alcools, phénols
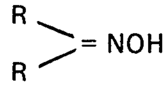 oximes
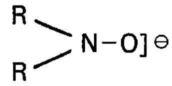 anions d'oximate
$R-SH$ mercaptans
$R-S-R$ thioéthers
$R-O-R$ éthers
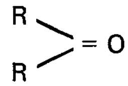 cétones, aldéhydes
ou
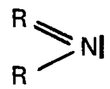 aldimines, cétimines

et leurs combinaisons.

2. Composition de vernis cationique aqueuse selon la revendication 1, caractérisée par le fait qu'on utilise comme initiateurs fournissant des radicaux ceux qui, à des températures supérieures à 100° C, fournissent des radicaux ou séparent l'acide.

3. Composition de vernis cationique aqueuse selon l'une des revendications 1 ou 2, caractérisée par le fait qu'elle contient, comme liants de vernis insaturés oléfiniquement à groupements N-basiques, ceux qui contiennent des groupes amidométhyle insaturés oléfiniquement en α,β, et/ou un produit dérivé d'un polymérisat diénique.

4. Utilisation de la composition de vernis cationique aqueuse selon l'une des revendications précédentes pour la peinture par électrodéposition cathodique de surfaces métalliques.

5. Utilisation de la composition de vernis cationique aqueuse selon l'une des revendications 1 à 3 pour les méthodes traditionnelles de peinture, telles que pulvérisation, trempage ou aspersion.